# EUROPEAN PATENT SPECIFICATION

(11) **EP 3 804 162 B1**
(45) Date of publication and mention of the grant of the patent: **10.08.2022**
(21) Application number: 19727647.0
(22) Date of filing: 28.05.2019
(51) Int. Cl.: H04B 7/06, H04B 7/08, G01S 7/02

(54) **COEXISTENCE OF RADAR PROBING AND WIRELESS COMMUNICATION**
KOEXISTENZ VON RADARSONDIERUNG UND DRAHTLOSER KOMMUNIKATION
COEXISTENCE DE SONDAGE RADAR ET DE COMMUNICATION SANS FIL

(30) Priority: 06.06.2018 SE 1830181
(43) Date of publication of application: 14.04.2021
(73) Proprietor: Sony Group Corporation, Tokyo 108-0075 (JP)
(72) Inventor: BENGTSSON, Erik, 241 35 Eslöv (SE)
(74) Representative: Neusser, Sebastian
(86) International application number: PCT/EP2019/063850
(87) International publication number: WO 2019/233830

(56) References cited:
- LIU FAN ET AL: "Simultaneous target detection and multi-user communications enabled by joint beamforming", 2018 IEEE RADAR CONFERENCE (RADARCONF18), IEEE, 23 April 2018 (2018-04-23), pages 89-94, XP033356183, DOI: 10.1109/RADAR.2018.8378536 [retrieved on 2018-06-08]
- LI BO ET AL: "Joint Transmit Designs for Coexistence of MIMO Wireless Communications and Sparse Sensing Radars in Clutter", IEEE TRANSACTIONS ON AEROSPACE AND ELECTRONIC SYSTEMS, IEEE SERVICE CENTER, PISCATAWAY, NJ, US, vol. 53, no. 6, 1 December 2017 (2017-12-01), pages 2846-2864, XP011673988, ISSN: 0018-9251, DOI: 10.1109/TAES.2017.2717518 [retrieved on 2017-12-05]

## Description

### TECHNICAL FIELD

Various examples of the invention relate to performing a beam sweep to identify one or more beams for communication on a wireless link. Various examples of the invention relate to performing radar probing.

### BACKGROUND OF THE INVENTION

Object detection, for example to localize an object and/or to determine a movement of an object, may be advantageous in several use cases such as vehicle control, monitoring of buildings and sites, and navigation.

Radar probing enables accurate object detection. Radar probing employs radio waves at frequencies in the range of, e.g., 20 GHz - 80 GHz to determine the range, angle or velocity of objects. Pulsed radio waves or continuous radio waves may be employed as radar signals.

Modern wireless communication networks-e.g., Third Generation Partnership (3GPP) New Radio (NR) 5G technology - also employ radio wave carriers at frequencies in the range of 20 GHz - 80 GHz.

Hence, there may be interference between wireless communication and radar probing. This may specifically apply where a wireless communication device (sometimes also referred to as user equipment, UE) that is connectable to the wireless communication network is equipment with radar probing functionality.

The document "Simultaneous target detection and multi-user communications enabled by joint beamforming" by Liu Fan et AI, 2018 IEEE RADAR CONFERENCE, pages 89-94, discloses a method for minimizing interferences between wireless communication and radar probing. This is done by joint beamforming of both radar and wireless communication systems.

### SUMMARY

A need exists for advanced techniques to provide for co-existence between radar probing and wireless communication.

This need is met by the features of the independent claims. The features of the dependent claims define embodiments.

A method of operating a wireless communication device includes performing at least one beam sweep to identify one or more beams for communication on a wireless link between the wireless communication device and a further wireless communication device. The method also includes determining one or more directions based on the at least one beam sweep. The method also includes performing radar probing along the one or more directions.

A computer program or computer program product includes program code. The program code can be executed by at least one processor. Executing the program code causes the at least one processor to perform a method of operating a wireless communication device. The method includes performing at least one beam sweep to identify one or more beams for communication on a wireless link between the wireless communication device and a further wireless communication device. The method also includes determining one or more directions based on the at least one beam sweep. The method also includes performing radar probing along the one or more directions.

For example, it may be possible that the one or more directions are determined to be offset from the one or more beams identified based on the at least one beam sweep.

The method may further include selecting the one or more beams from a beam codebook based on the at least one beam sweep. The method may further include determining the one or more directions based on non-selected beams of the beam codebook.

The method may further include establishing whether beam correspondence is provided on the wireless link. The method may further include activating said performing of the radar probing along the one or more directions if there is beam correspondence.

For example, the performing of the radar probing may be selectively activated if there is beam correspondence; hence, if there is no beam correspondence, the radar probing may not be activated.

The at least one beam sweep may include at least one of a receive beam sweep and a transmit beam sweep.

For example, the radar probing may be performed in response to identifying the one or more beams.

For example, the method may further include communicating a control signal on the wireless link indicative of at least one radar-probing constraint. The method may also include performing the radar probing in accordance with the at least one radar-probing constraint.

For example, the radar-probing constraint may include at least one of a transmit power restriction, a timing restriction, a frequency band restriction, and a spatial restriction.

The spatial restriction may be with respect to the one or more directions determined for the radar probing.

For example, the at least one beam sweep may include a receive beam sweep of a pilot signal. The receive beam sweep may include measurements of a received signal strength of the pilot signal, wherein the one or more beams are identified based on the received signal strength.

It may be possible that multiple pilots signals are communicated, e.g., different pilot signals on different beams.

For example, the at least one beam sweep may include a transmit beam sweep of a pilot signal. The one or more beams max be identified based on a feedback signal associated with the transmit beam sweep.

For example, the method may further include setting a transmit power of the radar probing based on a received signal strength of a pilot signal of the at least one beam sweep.

For example, the at least one beam sweep may be allocated to a first frequency band. It would be possible that the communication is allocated to a second frequency band which is included in the first frequency band.

The radar probing may be allocated to a third frequency band which is larger than the second frequency band.

For example, the method may further include: determining whether the wireless communication device is cleared-to-probe. If the wireless communication device is cleared-to-probe, the radar probing may be performed spatially unrestricted.

A wireless communication device is configured to perform at least one beam sweep to identify one or more beams for communication on a wireless link between the wireless communication device and a further wireless communication device. The wireless communication device is also configured to determine one or more directions based on the at least one beam sweep. The wireless communication device is also configured to perform radar probing along the one or more directions.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a wireless communication system according to various examples.
FIG. 2 schematically illustrates the wireless communication system of FIG. 1 in greater detail.
FIG. 3 is a flowchart of a method according to various examples.
FIG. 4 schematically illustrates a beam sweep according to various examples.
FIG. 5 schematically illustrates identifying one or more beams for wireless communication and performing radar probing according to various examples.
FIG. 6 schematically illustrates identifying one or more beams for wireless communication and performing radar probing according to various examples.
FIG. 7 schematically illustrates directions of the radar probing according to various examples.
FIG. 8 schematically illustrates frequency bands used by a beam sweep, wireless communication, and radar probing according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques that facilitate coexistence between radar probing and communication on a wireless link (wireless communication) are described. Specifically, the techniques described herein facilitate a UE to implement, both, radar probing and wireless communication.

Radar probing may be employed for object detection and/or positioning use cases. Radar probing may include transmission of radar signals, e.g., pulsed or continuous radio waves, from a wireless communication device such as a UE. The reflected radar signals, sometimes referred to as echo or secondary radar signals, are received at the wireless communication device or a further wireless communication device. The secondary radar signals can be analyzed by the wireless communication device and/or by a further wireless communication device. A receive property of the reflected radar signals can be analyzed. For example, the receive property may be selected from the group comprising: a phase offset; a time-of-flight; an amplitude; a path loss; a frequency shift; an angle of arrival; and a polarization. Thereby, a distance, and/or a size, and/or a speed, and/or a direction of movement, and/or an acceleration of an object providing the reflection can be determined.

As a general rule, wireless communication described herein can be implemented according to various techniques. For example, wireless communication can be implemented by a cellular network. For example, a 3GPP NR 5G cellular network can be used. Here, a mm-wave frequency band can be used for the wireless communication. Hereinafter, primarily techniques of wirelessly communicating between a UE and a base station (BS) of a communication system implemented by a cellular network are described. As a general, rule, similar techniques may also be applied for other communication systems, e.g., in a peer-to-peer communication such as on a sidelink channel, or communication between a UE and an access point, etc..

The direction of communicating from the BS to the UE is labeled downlink (DL) direction; and the direction of communicating from the UE is labeled uplink (UL) direction. As a general rule, various example techniques described herein for DL transmission may be equally applied to UL transmission; and vice versa.

For cost and size reasons, it may be advantageous to re-use the same hardware for radar probing and wireless communication. The hardware is often designed for operation in a dedicated frequency range. Then, radar probing and wireless communication can be implemented in at least overlapping frequency bands. Then, there is a potential for interference between radar probing and wireless communication.

Various techniques are based on the finding that the interference between radar probing and wireless communication can depend on beamforming employed for the wireless communication.

According to various examples, the wireless communication includes beamforming. One advantage of beamforming is the ability to transmit on high carrier frequencies by increasing antenna aperture, e.g., above 6 GHz and even up to 60 GHz or beyond. Large bandwidths may be achieved. Another advantage of beamforming is the availability of spatial multiplexing, thereby increasing spectral efficiency. The overall antenna efficiency can be increased. To implement beamforming, an antenna panel can implement phase-coherent transmission in accordance with certain values determined for antenna weights of multiple antenna elements of the antenna panel, thereby creating a transmission directivity. Here, the gain in a certain direction is often several dBs higher than the gain from a single antenna element (beamforming gain). The use of multiple antenna elements is sometimes referred to as Multiple Input Multiple Output (MIMO). The amplitude and phase relationship between the different antenna elements are specified by the specific values of the antenna weights, where each value of the antenna weights is indicative of the amplitude and phase of a given antenna element of an antenna panel. Different values of the antenna weights are associated with different beams of the beamformed transmission; beams may differ in terms of direction, beam width, etc.. By changing the value of the antenna weights or alternate between using different antenna elements to form beams, it is possible to switch between different beams (beam switching). Different gain can be achieved for different directions. Typically, the beamforming gain by transmitting and/or receiving along the appropriate beam can be significant. Attenuation is observed for non-appropriate beams.

As a general rule, beamforming may be employed for receiving signals (receive beamforming) and/or for transmitting signals (transmit beamforming). Receive beamforming uses a receive beam. Transmit beamforming uses a transmit beam.

As a further general rule, beamforming may be implemented in uplink (UL) and/or in downlink (DL).

When implementing a beamforming, the direction of the one or more beams may have a significant impact on the link performance. This is because of the transmission characteristics varying for different spatial propagation paths that are defined by the beams. For example, a particular low-path loss may be expected for transmission along a line-of-sight spatial propagation channel. Generally, a beam oriented in the right direction will improve the link budget with many dBs, according to the beamforming gain; communication along inappropriate beams will result in strong attenuation.

According to various examples, at least one beam sweep may be employed to determine one or more beams that have a high beamforming gain. Specifically, the appropriate orientation of the beam to be used has to be determined. In a beam sweep, one or more reference signals (sometimes also referred to as pilot signals) are transmitted or received. A DL beam sweep including DL pilot signals can be used. Also, an UL beam sweep including UL pilot signals can be used. Also, a sidelink beam sweep between two UEs can be used. Based on a receive property of pilot signals, it is then possible to identify the appropriate beam. For example, a DL transmit beam sweep may be employed at the BS and a time-synchronized DL receive beam sweep may be employed at the UE. Alternatively or additionally, it would also be possible to perform an UL transmit beam sweep at the UE and perform a time-synchronized UL receive beam sweep at the BS. Here, a beam sweep may include transmission and/or reception of pilot signals on multiple beams. Pairs of beams providing good beamforming gain can then be selected for the wireless communication.

Using a beam sweep to determine one or more beams is sometimes referred to as a codebook (CB) operational mode. The CB operational mode may determine a beam by selecting a given beam from a plurality of predefined candidate beams. As such, the CB operational mode may determine associated values for the antenna weights from a plurality of predefined candidate values of the antenna weights. For example, these candidate values may be included in a CB. Each entry in the CB may be associated with a candidate beam. Details of such CB-based beam management including beam sweeps are, e.g., described in 3GPP TSG RAN WG1 meeting #86, R1-166089; R1-167466; R1-167543; R1-166389.

According to various examples, a wireless communication device can be operated to perform at least one beam sweep. The beam sweep is to identify one or more beams for the wireless communication. Then, it is possible to determine one or more directions based on the at least one beam sweep. It is then possible to perform radar probing along the one or more directions (radar-probing directions).

As a general rule, various options are available for determining the one or more directions based on the beam sweep. In one example, it would be possible to determine the one or more directions to be offset from the one or more beams. Offset can correspond to determining the one or more directions such that they differ from the one or more beams. For example, the one or more directions can point to different points in the environment if compared to the one or more beams.

In a specific example, using a CB operational mode, a transmit beam and/or a receive beam for wireless communication can be identified at the UE. The UE, based on a corresponding beam list, may be aware in what directions the BS can be reached. Then, according to various examples, one or more radar-probing directions that are offset from one or more beams in such a beam list can be used for radar operation with low chance for interference. In some examples, the UE may perform repeated receive beam sweeps to populate a beam list for the wireless communication.

If the UE reported beam correspondence - i.e., a condition where reciprocity of the path loss is provided for a transmit beam having certain antenna weights and a receive beam having these antenna weights - the list of all or at least some beams of CB with the exception of the beams selected for wireless communication and included in the beam list then may define the radar-probing directions. Thus, generally speaking, one or more beams may be selected from a CB; the one or more radar-probing directions may then be determined based on the non-selected beams of the CB.

Such techniques of implementing radar probing may be referred to as semi-unsanctioned radar probing. With semi-unsanctioned it is meant that the UE may perform radar probing on the determined one or more radar-probing directions without a need of notifying the BS of the one or more radar-probing directions. Thus, the radar probing may be triggered by and be in response to identifying the one or more beams for the wireless communication or, generally, may be triggered by and be in response to the beam sweep; intermediate control signaling with the BS may not be required.

Nonetheless, according to some examples, there may be DL control signaling by means of which the BS can restrict one or more operational parameters of the UE performing the radar probing, e.g., in case interference in the cell increases. Corresponding radar-probing constraints may include one or more of: a transmit power restriction; restricted directions as part of a spatial restriction; a timing restriction; a frequency band restriction; etc..

Further, the UE may restrict the one or more radar-probing directions with respect to other UEs, if it detects energy transmitted from the other UEs as the UE performs the receive beam sweep. For this, the spectral power level may be determined; thereby, even without being able to decode and/or demodulate communication by the other UEs, it is still possible to conclude back on where the other UEs are located.

It is also possible to set a transmit power of the radar probing based on the spectral power level. For example, if it is judged that one or more other UEs are in close vicinity - due to a high spectral power level - then the transmit power may be appropriately adjusted, e.g., lowered.

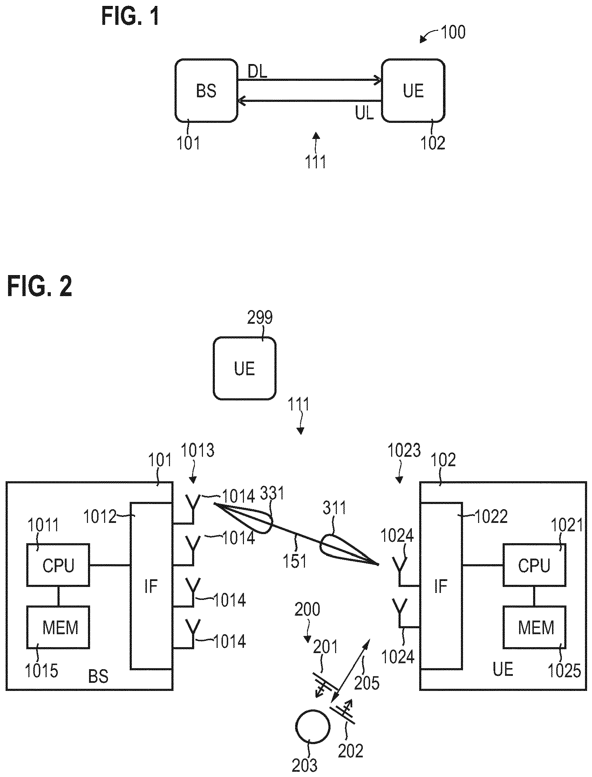

FIG. 1 schematically illustrates a wireless system 100 that may benefit from the techniques disclosed herein. The communication system may be implemented by a 3GPP-standardized network such as 3G, 4G, or upcoming 5G NR. Other examples include point-to-point networks such as Institute of Electrical and Electronics Engineers (IEEE)-specified networks, e.g., the 802.11x Wi-Fi protocol or the Bluetooth protocol. Further examples include 3GPP NB-IOT or eMTC networks.

The system 100 includes a BS 101 and a UE 102. A wireless link 111 is established between the BS 101 - e.g., a gNB in the 3GPP NR framework - and the UE 102. The wireless link 111 includes a DL wireless link from the BS 101 to the UE 102; and further includes an UL wireless link from the UE 102 to the BS 101. Time-division duplexing (TDD), frequency-division duplexing (FDD), and/or code-division duplexing (CDD) may be employed for mitigating interference between UL and DL. Likewise, TDD, FDD, CDD and/or spatial division duplexing (SDD) may be employed for mitigating interference between multiple UEs communicating on the wireless link 111 (not shown in FIG. 1).

The wireless link 111 may occupy frequencies above 6 GHz. mmWave technology may be employed.

The UE 102 may be one of the following: a smartphone; a cellular phone; a tablet; a notebook; a computer; a smart TV; an MTC wireless communication device; an eMTC wireless communication device; an loT wireless communication device; an NB-IoT wireless communication device; a sensor; an actuator; etc..

FIG. 2 schematically illustrates the BS 101 and the UE 102 in greater detail.

The BS 101 includes a processor 1011 and an interface 1012, sometimes also referred to as frontend. The interface 1012 is coupled via antenna ports (not shown in FIG. 2) with an antenna panel 1013 including a plurality of antennas 1014. In some examples, the antenna panel 1013 may include at least 30 antennas 1014, optionally at least 110 antennas, further optionally at least 200 antennas. Sometimes, a scenario implementing a large number of antennas 1014 is referred to as full dimension multi-input multi-output (FD-MIMO) or massive multi-input multiple-output (Massive MIMO, MaMi). Each antenna 1014 may include one or more electrical traces to carry a radio frequency current. Each antenna 1014 may include one or more LC-oscillators implemented by the electrical traces. Each trace may radiate electromagnetic waves with a certain beam pattern. In some examples the BS 101 may include multiple antenna panels (not illustrated in FIG. 2).

The processor 1011 and the memory 1015 form a control circuit.

The BS 101 further includes a memory 1015, e.g., a non-volatile memory. The memory may store program code that can be executed by the processor 1011. Executing the program code may cause the processor 1011 to perform techniques with respect to participating in a wireless communication on the wireless link 111, communicating one or more UL and/or DL pilot signals, performing UL receive beam sweeps and/or DL transmit beam sweeps, etc..

The UE 102 includes a processor 1021 and an interface 1022, sometimes also referred to as frontend. The interface 1022 is coupled via antenna ports (not shown in FIG. 2) with an antenna panel 1023 including a plurality of antennas 1024. In some examples, the antenna panel 1023 may include at least 6 antennas, optionally at least 16 antennas, further optionally at least 32 antennas. Generally, the antenna panel 1023 of the UE 102 may include fewer antennas 1024 than the antenna panel 1013 of the BS 101. Each antenna 1024 may include one or more electrical traces to carry a radio frequency current. Each antenna 1024 may include one or more LC-oscillators implemented by the electrical traces. Each trace may radiate electromagnetic waves with a certain beam pattern. Also the UE 102 may include multiple antenna panels 1023 (not illustrated in FIG. 2).

The processor 1021 and the memory 1025 form a control circuit.

The UE 102 further includes a memory 1025, e.g., a non-volatile memory. The memory 1025 may store program code that can be executed by the processor 1021. Executing the program code may cause the processor 1021 to perform techniques with respect to participating in a wireless communication the wireless link 111, communicating one or more UL and/or DL pilot signals, performing UL transmit beam sweeps and/or DL receive beam sweeps, performing radar probing, etc..

FIG. 2 also illustrates aspects with respect to propagation channels 151. FIG. 2 schematically illustrates that different propagation channels 151 (dashed lines in FIG. 2) are implemented on the wireless link 111. The different propagation channels 151 are associated with different pairs of beams 311, 331 (in FIG. 2, for sake of simplicity, only a single beam 311 implemented by the UE 102 and a single beam 331 implemented by the BS 101 are illustrated). For example, to implement a certain propagation channel 151 for DL communication, a certain DL transmit beam 331 may be selected for the antenna panel 1013 of the BS 101 and a corresponding DL receive beam 311 may be selected for the antenna panel 1023 of the UE 102.

As a general rule, a given beam may be implemented by using certain values of the antenna weights of the antennas 1014, 1024 of the respective antenna panel 1013, 1023. Sometimes, the antenna weights are also referred to as steering vectors or precoding parameters. Accordingly, different beams 311, 331 may be implemented by using different amplitude and phase configurations for the various antennas 1014, 1024, i.e., different values for the antenna weights. For example, given antenna weights may be used for a transmit beam and a receive beam; then the transmit beam is inverted to obtain the receive beam.

If there is beam correspondence, then the same propagation channel 151 can be addressed by inverting receive and transmit beams. Reciprocity between transmitting and receiving on a given beam may be provided for. The path loss of different directions - e.g., UL and DL - along a given propagation channel 151 is approximately the same. Beam correspondence may correlate with reciprocity: In FIG. 2, a scenario including reciprocity of the propagation channel 151 and, hence, beam correspondence is illustrated.

FIG. 2 also illustrates aspects with respect to radar probing 200. Radar probing 200 is performed by the UE 102. In the example of FIG. 2, the radar probing 200 is implemented by pulsed-mode radar ranging including primary radar signals 201 travelling from the UE 102 to an object 203 and further including secondary radar signals 202 having been reflected by the object 203 travelling from the object 203 to the UE 102. For example, time-of-flight ranging can be implemented.

As illustrated, the direction 260 along which the radar probing 200 is implemented is offset from the beam 311 employed by the UE 102 to wirelessly communicate with the BS 101. This corresponds to SDD of (i) wireless communication and (ii) radar probing. Thereby, interference between (i) wireless communication and (ii) radar probing can be reduced.

In FIG. 2, also another UE 299 is illustrated that may communicate with the BS 101 or another BS or another wireless communication device using a further wireless link (not illustrated in FIG. 2). To avoid interference between the radar probing 200 and the wireless communication of the UE 299, the UE 101 may measure a spectral power level on the various beams; an increased spectral power level may be experienced in the direction of the UE 299 due to the UE 299 accessing the spectrum. Then, the direction 260 can be offset from the direction of the UE 299, to mitigate interference. Thus, as a general rule, the direction 260 can be determined based on the spectral power level measured when performing a receive beam sweep.

Alternatively or additionally to such a dependency of the direction 260 of the radar probing 200 on the spectral power level, it would also be possible to set the transmit power of the radar probing 201 based on the measured spectral power level. For example, if another UE 299 is detected in a given direction due to an increased spectral power level, then it would be possible to reduce the transit power of the radar probing 200 in this direction. This also mitigates interference.

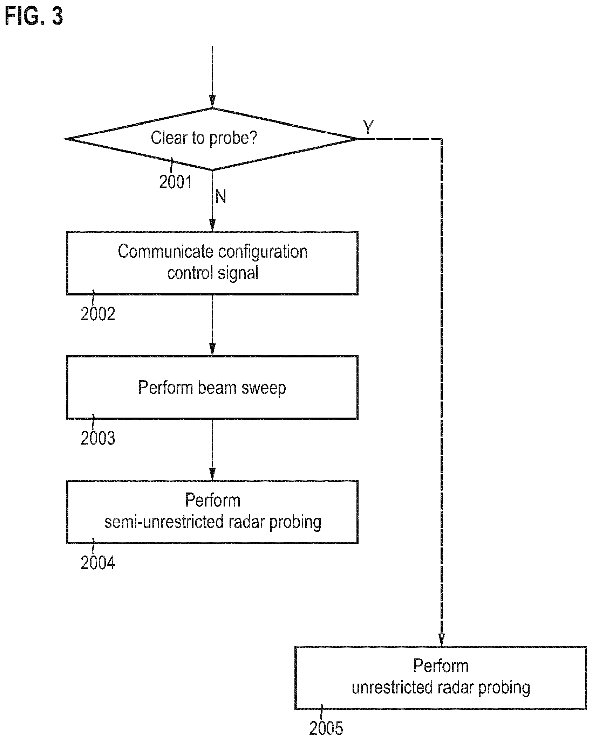

FIG. 3 is a flowchart of a method of operating a wireless communication device according to various examples. For example, the method of FIG. 3 may be executed by a UE, e.g., by the UE 102. For example, the method may be executed by the control circuitry 1021, 1025 of the UE 102. Alternatively or additionally, the method may be executed by a BS, e.g., by the BS 101. For example, the method may be executed by the control circuitry 1011, 1015 of the BS 101.

First, at optional block 2001, it is checked whether the wireless communication device is clear to perform radar probing. As a general rule, various options are available to implement block 2001.

In one option, the wireless communication device may test whether it is out-of-coverage. In other words, it can be checked whether a wireless communication on a wireless link between the wireless communication device and a further wireless communication device is possible. For example, if a distance between the wireless communication device and the further wireless communication device is large, then the wireless communication device may be out-of-coverage and communication on the wireless link may not be possible due to increased path loss.

In another option, the wireless communication device may test whether any signals are received, e.g., from further wireless communication devices. This may correspond to a listen-before-talk approach. For example, if - within a given timeframe - no signals are received, then it can be judged that the wireless communication device is cleared to perform the radar probing.

If, at block 2001, it is judged that the wireless communication device is cleared to perform radar probing, then at optional block 2005 unrestricted radar probing is performed. Specifically, at block 2005, the radar probing can be performed spatially unrestricted, e.g., in any direction that the wireless communication device chooses to be appropriate. For example, omni-directional radar probing can be performed.

Otherwise, if at block 2001 it is judged that the wireless communication device is not out-of-coverage - i.e., is in-coverage -, then, at optional lock 2002, a control signal can be communicated on the wireless link.

For example, it would be possible that the control signal is a DL control signal that is received by the UE 102 from the BS 101 (cf. FIG. 2). In other examples, it would be possible that the control signal is an UL control signal that is transmitted by the UE 102 to the BS 101 (cf. FIG. 2). In still other examples, it would be possible that the control signal is a sidelink control signal.

The control signal can be indicative of at least one radar-probing constraint. The at least one radar-probing constraint can impose certain restrictions on the radar probing. For example, the radar-probing constraint can include a transmit power restriction, a timing restriction, and a frequency band restriction of the radar probing.

For example, the transmit power restriction may impose an upper threshold for the transmit power. For example, the timing restriction may impose an upper threshold for a repetition rate of the radar probing. For example, the frequency band restriction may be indicative of certain blocked frequency bands.

Then, the radar probing can be performed using a transmit power, a timing, and/or a frequency band in accordance with the transmit power restriction, the timing restriction and/or the frequency band restriction. For example, the transmit power of the radar probing may be set such that it stays below an upper threshold imposed by the transmit power restriction of the radar-probing constraint.

The radar-probing constraint can also include a spatial restriction for one or more radar-probing directions. Then, the radar probing can be performed along one or more radar-probing directions in accordance with the spatial restriction. For example, blocked directions may be spared.

At block 2003, at least one beam sweep is performed. This is done to identify one or more beams for wireless communication on the wireless link. For example, the at least one beam sweep may include a transmit beam sweep and/or a receive beam sweep. Pilot signals may be communicated on multiple candidate beams as part of the at least one beam sweep. Then, based on a receive property of the pilot signals, one or more beams may be identified for the wireless communication.

At block 2004, semi-unrestricted radar probing is performed. The radar probing may be semi-unrestricted, because it is performed along one or more radar-probing directions that are determined, by the wireless communication device, to be offset from the one or more beams identified by means of the beam sweep at block 2003, without a need to obtain further, specific authorization to perform the radar probing along these specific one or more radar-probing directions.

In any case, the radar probing can be in accordance with the radar-probing constraint indicated by the control signal of block 2002; but, if this constraint is met by the determined one or more directions, further authorization to perform the radar probing along the one or more radar-probing directions may not be required.

Specifically, the radar probing, at block 2004, may be performed in response to identifying the one or more beams using the beam sweep at block 2003. No additional authorization may be required. Additional control signaling on the wireless link may not be required. This helps to reduce a control signaling overhead on the wireless link. At the same time, the interference between the radio probing and the wireless communication can be reduced.

As will be appreciated from FIG. 3, the optional decision-taking process at block 2001 can correspond to a listen-before-talk approach where, first, (listen) the spectral power level is measured to determine whether there is a risk of interference; and, second, (talk) depending on the spectral power level, an unrestricted or semi-unrestricted access to the spectrum is implemented.

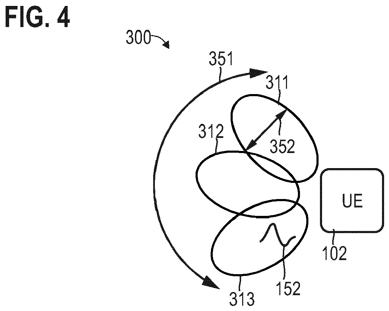

FIG. 4 illustrates aspects with respect to a beam sweep 300. The beam sweep 300 may be performed at block 2003 of FIG. 3.

As a general rule, the UE 102 may be in connected mode with a data connection being established between the UE 102 and the BS 101 when performing a beam sweep 300. It would also be possible that the UE 102 is in disconnected mode where a data connection is not established between the UE 102 and the BS 101 when performing the beam sweep 300. Here, it would be possible that the beam sweep 300 is in preparation of a future wireless communication on the wireless link 111.

For example, the beam sweep 300 may be a transmit beam sweep of UL pilot signals 152 or may be a receive beam sweep of DL pilot signals 152.

In an example, a transmit beam sweep of the UE 102 may be time-aligned with the receive beam sweep of the BS 101. In another example, a receive beam sweep of the UE 102 may be time-aligned with a transmit beam sweep of the BS 101. Thus, while the BS 101 is transmitting, the UE 102 may be configured to listen, and vice versa. The beam sweep 300, in the example of FIG. 4, includes three beams 311, 312, 313. Thereby, a certain beam sweep angle 351 is implemented. The beam sweep angle 351 is achieved by the opening angle 352 of each one of the beams 311 - 313. Depending on the particular beam sweep, the count of beams, the opening angle 352, the beam sweep angle 351, etc., can vary.

The values of the antenna weights used for each one of the beams 311 - 313 are predefined in a corresponding CB. Then, e.g., if beam 312 shows a larger signal strength at the receiver if compared to beams 311 and 313, the values of the antenna weight used for subsequent communication on the wireless link 111 may be determined in accordance with the values of the antenna weights defining the beam 312. Hence, the beam 312 may be selected from a CB based on the beam sweep.

For example, if the beam 312 is selected from the CB, then it would be possible that radar-probing directions 260 are determined based on non-selected beams 311, 313, e.g., by aligning the radar-probing directions 260 with the non-selected beams 311, 313.

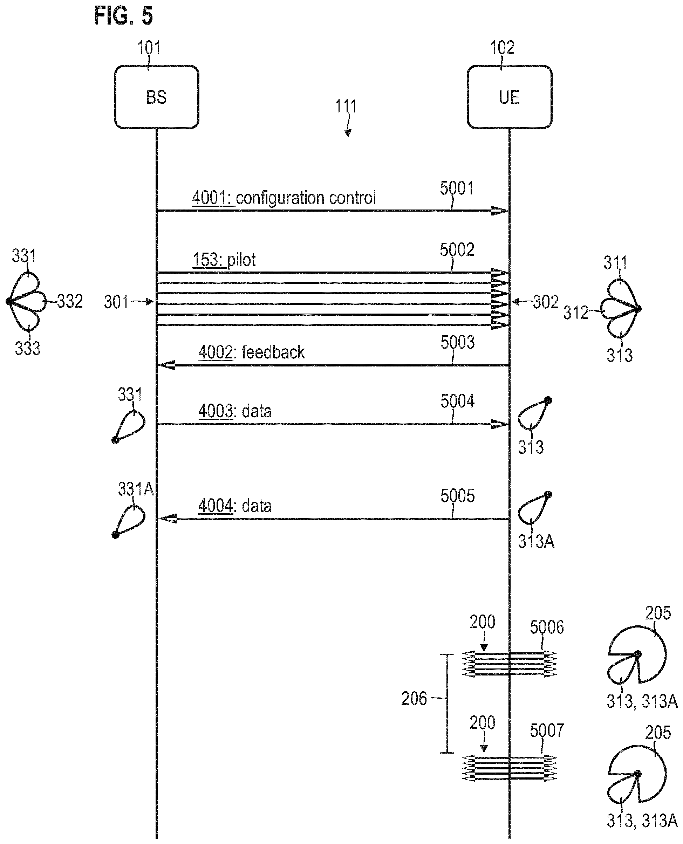

Details with respect to beam sweeps are also illustrated in FIG. 5.

FIG. 5 is a signaling diagram of wireless communication on the wireless link 111. FIG. 5 illustrates aspects with respect to a transmit beam sweep 301 of DL pilot signals 153 and a receive beam sweep 302 of the DL pilot signals 153. The beam sweeps 301, 302 are used to sound the wireless link 111 to facilitate wireless communication on the wireless link 111.

Initially, at 5001, a control signal 4001 is transmitted by the BS 101 and received by the UE 102. The control signal 4001 is, hence, communicated on the wireless link 111. The control signal 4001 is indicative of at least one radar-probing constraint to be applied to radar probing 200. As such, 5001 can correspond to block 2002 of FIG. 3.

After a while, the transmit beam sweep 301 of the DL pilot signals 153 and a receive beam sweep 302 of the DL pilot signals 153 are implemented. The transmit beam sweep 301 - performed by the BS 101 - includes transmit beams 331-333. The receive beam sweep 302 - performed by the UE 102 - includes receive beams 311-313.

The transmit beam sweep 301 and the receive beam sweep 302 are time-aligned / synchronized. For example, the BS 101 may first transmit DL pilot signals on the beam 331; while the BS 101 transmits the DL pilot signals 153 on the beam 331, the UE 102 may listen for/attempt to receive the DL pilot signals 153 on the beam 311, on the beam 312, and on the beam 313, e.g., sequentially or at least partially in parallel. Next, the BS 101 may transmit DL pilot signals 153 on the beam 332; again, while the BS 101 transmits the DL pilot signals 153 on the beam 332, the UE may attempt to receive the DL pilot signals 153 on all beams 311-313. Lastly, the BS 101 may transmit DL pilot signals 153 on the beam 333 and the UE 102 may attempt to receive the DL pilot signals 153, again, on all beams 311-313.

As a general rule, pilot signals 152, 153 can be indicative of the particular beam on which they are transmitted such that, at the receiver, a conclusion can be made on to which transmit beam provides for a propagation channel 151 with low path loss, at a given receive beam.

For example, in the scenario of FIG. 5, the UE 102 identifies the receive beam 313 in combination with the transmit beam 331 to be associated with a propagation channel 151 having a comparably small path loss. For example, this can include measurements of a received signal strength of the DL pilot signals 153. For example, it would be possible to identify the receive beam 313 as the particular beam having the highest received signal strength. Hence, the UE 102 selects the transmit beam 331 and the receive beam 313. This corresponds to identifying the receive beam 313 to be used by the UE 102 for wireless communication.

Next, at block 5003, the UE 102 transmit an UL feedback signal 4002 to the BS 101. The UL feedback signal is indicative of the transmit beam 331 and optionally indicative of the receive beam 313.

Then, at 5004, the BS 101 transmits DL data signals 4003 using the transmit beam 331 and the UE 102 receives the DL data signals 4003 using the receive beam 313. Hence, at 5004, wireless communication is implemented on the wireless link 111 on the beams 331, 313 identified in the beam sweeps 301, 302.

FIG. 5 illustrates a scenario where beam correspondence is provided on the wireless link 111. For this reason, the UE 102 can assume that a transmit beam 313A that is aligned with the receive beam 313 - i.e., the transmit beam 313A is reciprocal to the receive beam 313 - can also implement wireless communication on the wireless link 111 along propagation channel 151 associated with a low path loss. Accordingly, at 5005, the UE 102 transmits UL data signals 4004 using the transmit beam 313A and the BS 101 receives the UL data signals 4004 using the receive beam 331A that is also aligned with the transmit beam 331.

Because there is beam correspondence provided on the wireless link 111, the UE 102 can conclude that transmitting radio signals 201 along directions 260 offset from the beams 313, 313A can provide for SDD with the wireless communication on the wireless link 111. This mitigates interference.

In the example of FIG. 5, accordingly, radar probing 200 is performed at 5006 and again at 5007. A repetition rate 206 defining a time duration between subsequent instances of the radar probing 200 is illustrated and may be set to be larger than a respective timing restriction of the radar-probing constraint indicated by the control signal 4001.

As illustrated by the polar plots in FIG. 5, the radar-probing directions 260 are offset from the beams 313, 313A.

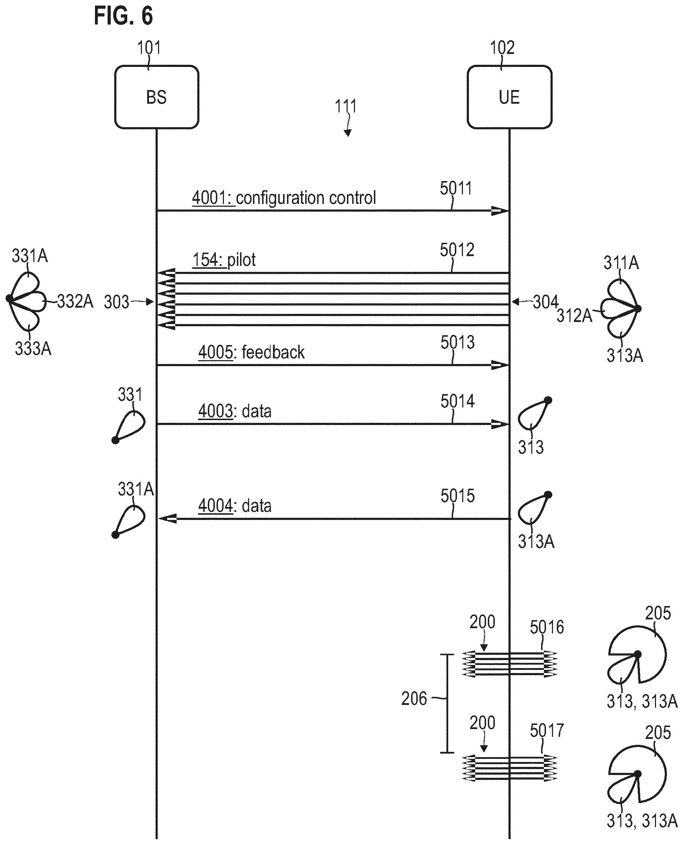

FIG. 6 is a signaling diagram of wireless communication on the wireless link 111. FIG. 6 illustrates aspects with respect to a receive beam sweep 303 of UL pilot signals 154 and a transmit beam sweep 304 of the UL pilot signals 154.

FIG. 6 generally corresponds to FIG. 5. For example, 5011 of FIG. 6 corresponds to 5001 of FIG. 5.

5012 generally corresponds to 5002; however, at 5012, the UE 102 performs a transmit beam sweep 304 of UL pilot signals 154 on the transmit beams 311A-313A; and the BS 101 performs a time-aligned receive beam sweep 303 on the receive beams 331A-333A.

Again, the receive beam sweep 303 can include measurements of the received signal strength of the UL pilot signals 154.

Then, at 5013, a DL feedback signal 4005 is transmitted by the BS 101 and received by the UE 102. The DL feedback signal 4005 is indicative of the beam 313A. Subsequently, at 5014 and 5015, the UE 102 uses the beam 313A and the reciprocal beam 313 to communicate data signals 4003, 4004 on the wireless link 111; these beams 313, 313A are identified by the UE 102 based on the feedback signal 4005.

5016 and 5017 corresponds to 5006 and 5007, respectively.

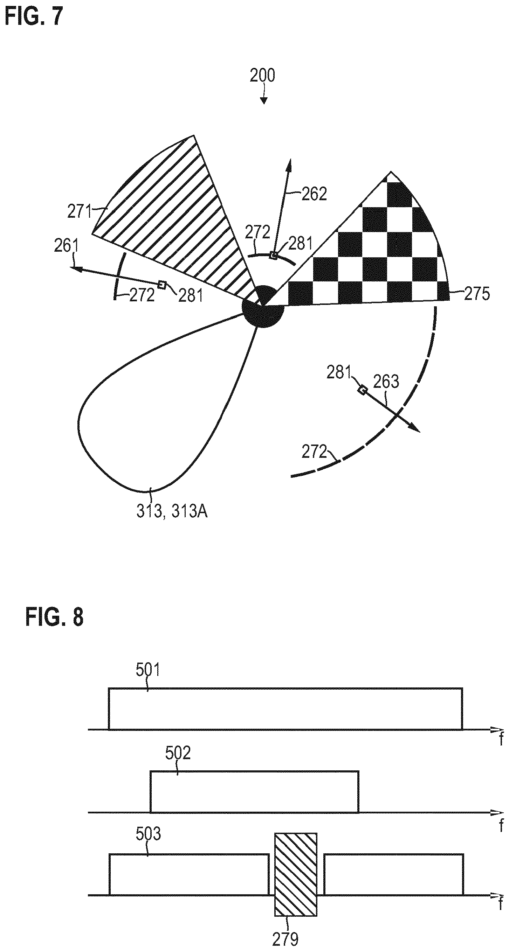

FIG. 7 illustrates details with respect to directions 261-263 along which the radar probing 200 is implemented. FIG. 7 is a polar plot. In FIG. 7, the directions 261-263 and corresponding transmit powers 281 of the radar probing 200 are illustrated (in the polar plot of FIG. 7, larger transmit power levels are associated with larger radial distance from the center of the polar plot).

In FIG. 7, radar probing 200 is implemented along radar-probing directions 261-263. These radar-probing directions 261-263 are offset from the beams 313, 313A used for the wireless communication on the wireless link 111 and, e.g., determined using one of the techniques as illustrated in FIGs. 5 and 6.

FIG. 7 also illustrates aspects with respect to radar-probing constraints. For example, radar-probing constraints as illustrated in FIG. 7 could be indicated by the control signal 4001 (cf. FIG. 5 and FIG. 6).

In the example of FIG. 7, the radar-probing constraints includes a spatial restrictions 271 for the radar-probing directions 261-263. Forbidden directions are implemented by the spatial restriction 271 (illustrated by the dashed areas in FIG. 7). As will be appreciated, the radar-probing directions 261-253 are selected in accordance with the spatial restrictions 271, i.e., offset from the forbidden directions.

In the example of FIG. 7, the radar-probing constraints also include a transmit power restriction 272. For example, the transmit power restriction 272 implies a low transmit-power threshold (dashed lines) on the transmit power for the radar probing 200 along the radar-probing direction 262; and does not imply a low transmit-power threshold for the radar probing 200 along the radar-probing direction 263.

As a general rule, there can be various reasons for imposing a network-controlled restriction on the transmit power; examples include knowledge on locations of other wireless communication devices.

As illustrated in FIG. 7, the transmit-power restriction 272 indicated by the radar-probing constraint may impose an upper limit for the actual transmit power used by the UE 102 when radar probing 200. For example, an the scenario FIG. 7, the radar probing 200 uses a transmit power 281 that stays below the respective transmit-power restrictions 272 for the radar-probing directions 261 and 263. The radar probing 200 uses a transmit power 281 that reaches the transmit-power restriction 272 for the radar-probing direction 262.

Such a concept of using the control signal 4001 to impose constraints on the radar probing 200 can refer to the semi-unsanctioned radar probing 200 where the UE 102 is control of the actual parameters of the radar probing 200 in view of certain constraints imposed by the wireless communication and/or in view of certain BS controlled constraints.

The actual transmit power 281 of the radar probing 200 can be set within the radar-probing constraints. For example, the transmit power 281 of the radar probing 200 could be set based on a received signal strength of the pilot signals 152-154 of the beam sweeps 300-304. For example, if a low received signal strength is observed on the beams selected for the wireless communication, then a comparably low transmit power 281 may be selected in radar-probing directions adjacent to the selected beams (such as illustrated in the example of FIG. 7 for the radar-probing directions 261, 263 which are adjacent to the beams 313, 313A).

As a general rule, other criteria can be taken into account when setting the transmit power 281, instead or in addition to the received signal strength of the pilot signals 152-154. For example, it would be possible to set the transmit power 281 based on a spectral power level measured as a part of a receive beam sweep. Thereby, other UEs 299 transmitting signals that may or may not be decodable by the UE 101 can be detected and interference can be mitigated also with respect to those other UEs 299.

Further illustrated in FIG. 7 is a UE-controlled spatial restriction 275 of the radar probing 200 (illustrated with a checkerboard filling in FIG. 7). For example, a receive beam sweep 302 implemented by the UE 102 may comprise measurements of a spectral power level in the frequency band used for the radar probing 200. The spectral power level may be associated with signals communicated by other wireless communication devices, e.g., other UEs (cf. FIG. 2 where another UE 299 is illustrated).

Such other wireless communication devices may not communicate on the wireless link 111 between the UE 102 and the BS 101. For example, other wireless communication devices connected to or camping on the same cell as the UE 102 may be communicating with the BS 101 using respective wireless links. Also, inter-cell interference for cellular networks may result in an increased spectral power level of other wireless communication devices located in adjacent cells.

Radar probing 200 can cause interference for these other wireless communication devices. Hence, the spatial restriction 275 and/or the transmit power 281 may be determined based on the determined spectral power level. As illustrated in FIG. 7, the radar-probing directions 261-263 are offset from the spatial restriction 275.

As a general rule, where the UE 102 is configured to perform a transmit beam sweep 304 (cf. FIG. 6) to sound the wireless channel 111, still, the UE 102 could be configured to perform a receive beam sweep including the measurements of the spectral power level for the purpose of determining the spatial restriction 275.

FIG. 8 illustrates aspects with respect to the frequency band 501 allocated to the beam sweeps 300-304, further with respect to the frequency band 502 allocated to the wireless communication on the wireless link 111, as well as further with respect to the frequency band 503 allocated to the radar probing 200.

As illustrated in FIG. 8, the frequency band 501 includes the frequency band 502. Also, the frequency band 503 includes the frequency band 502.

By dimensioning the frequency band 503 to have a large bandwidth, an accuracy of the radar probing 200 - e.g., a lateral resolution - can be increased. At the same time, by implementing the bandwidth of the frequency band 501 to cover the entire frequency bands 503 and 502, appropriate identification of beams, as well as appropriate identification of potential sources of interference of the radar probing 200 can be ensured.

FIG. 8 also illustrates a frequency band restriction 279 defining a forbidden frequency band for the radar probing 200. The frequency band restriction 279 may be part of a radar-probing constraint indicated by a DL control signal (cf. FIG. 5 and FIG. 6, control signal 4001).

Summarizing, techniques have been described in which a UE performs at least one beam sweep - e.g., a receive beam sweep and/or a transmit beam sweep - to populate a list with candidate beams for wireless communication with another wireless communication device, e.g., a BS or another UE. The at least one beam sweep may be performed in a wider bandwidth than the one intended for wireless communication; this may allow a wider bandwidth of the radar probing, which generally results in an increased resolution of positioning (cf. FIG. 8).

According to examples, all beam directions not in the candidate beam list and/or directions where the spectral power level is below a threshold can be used for radar probing, at least if the UE has beam correspondence (cf. FIG. 7).

As a general rule, the radar probing may use a different signal shape, bandwidth, and/or timing than the wireless communication. This is achieved by spatial multiplexing between radar probing and wireless communication: one or more directions are used for radar probing that are offset from one or more beams used for wireless communication. Directions overlapping with the one or more beams used for wireless communication can be excluded from radar probing. The transmit power level of the radar probing may be set such that interference with wireless communication is avoided (cf. FIG. 7).

The transmit power level of the radar probing may be restricted by one or more UE-controlled and/or network-controlled constraints. For example, the transmit power level may be dynamically or statically defined by the BS, regulatory defined, or related to the receive power level of pilot signals of the at least one beam sweep (cf. FIG. 7).

The BS may activate constraints for the radar probing using a control signal. The restrictions may be the power level, time domain restriction - perhaps the DL beam sweeps shall be avoided -, frequency-domain based, and /or spatially defined, e.g. restricted directions (cf. FIGs. 5 and 6).

The techniques described herein enable the UE to use waveforms optimized for radar probing which may not be easy to integrate together with the waveforms used for wireless communication.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above various examples have been described for wireless communication implemented by a communication system including a UE and a BS. Similar techniques may be readily applied to other kinds and types of communication systems, e.g., IEEE WLAN, etc..

## Claims

1. A method of operating a wireless communication device (101, 102), comprising:
- performing at least one beam sweep (300-304) to identify one or more beams (311-313, 331-333, 311A-313A, 331A-333A) for communication on a wireless link (111) between the wireless communication device (101, 102) and a further wireless communication device (101, 102),
- determining one or more directions (205) based on the at least one beam sweep (300-304), and
- performing radar probing (200) along the one or more directions (260-263).

2. The method of claim 1, further comprising:
- establishing whether beam correspondence is provided on the wireless link (111), and
- activating said performing of the radar probing (200) along the one or more directions (205) if there is beam correspondence.

3. The method of claims 1 or 2,
wherein the radar probing (200) is performed in response to identifying the one or more beams (311-313, 331-333, 311A-313A, 331A-333A).

4. The method of any one of the preceding claims, further comprising:
- communicating a control signal (4001) on the wireless link (111) indicative of at least one radar-probing constraint, and
- performing the radar probing (200) in accordance with the at least one radar-probing constraint.

5. The method of claim 4,
wherein the radar-probing constraint comprises at least one of a transmit power restriction (272), a timing restriction, a frequency band restriction (279), and a spatial restriction (271).

6. The method of any one of the preceding claims,
wherein the at least one beam sweep (300-304) comprises a receive beam sweep (300, 302, 303) of a pilot signal (152, 153, 154),
wherein the receive beam sweep (300, 302, 303) comprises measurements of a received signal strength of the pilot signal (152, 153, 154),
wherein the one or more beams (311-313, 331-333, 311A-313A, 331A-333A) are identified based on the received signal strength.

7. The method of claim 6,
wherein the receive beam sweep (300, 302, 303) comprises a measurement of a spectral power level due to a signal originating from one or more further wireless communication devices (299),
wherein at least one of the one or more directions (205) and a transmit power (281) of the radar probing (200) are determined based on the spectral power level.

8. The method of any one of the preceding claims,
wherein the at least one beam sweep (300-304) comprises a transmit beam sweep (300, 301, 304) of a pilot signal (152, 153, 154),
wherein the one or more beams (311-313, 331-333, 311A-313A, 331A-333A) are identified based on a feedback signal (4002, 4005) associated with the transmit beam sweep (300, 301, 304).

9. The method of any one of the preceding claims, further comprising:
- setting a transmit power (281) of the radar probing (200) based on at least one of a received signal strength of a pilot signal (152, 153, 154) of the at least one beam sweep (300-304) and a spectral power level of a receive beam sweep (300, 302, 303) of the at least one beam sweep (300-304).

10. The method of any one of the preceding claims,
wherein the at least one beam sweep (300-304) is allocated to a first frequency band (501),
wherein the communication is allocated to a second frequency band (502) which is included in the first frequency band (501) ,
wherein the radar probing (200) is optionally allocated to a third frequency (503) band which is larger than the second frequency band.

## Patentansprüche

1. Verfahren zum Betrieb einer drahtlosen Kommunikationsvorrichtung (101, 102), umfassend:
- Durchführen mindestens einer Strahlabtastung (300-304), um einen oder mehrere Strahlen (311-313, 331-333, 311A-313A, 331A-333A) zur Kommunikation auf einer drahtlosen Verbindung (111) zwischen der drahtlosen Kommunikationsvorrichtung (101, 102) und einer weiteren drahtlosen Kommunikationsvorrichtung (101, 102) zu identifizieren,
- Bestimmen einer oder mehrerer Richtungen (205) auf der Basis der mindestens einen Strahlabtastung (300-304) und
- Durchführen von Radarsondierung (200) entlang der einen oder mehreren Richtungen (260-263).

2. Verfahren nach Anspruch 1, ferner umfassend:
- Ermitteln, ob Strahlkorrespondenz auf der drahtlosen Verbindung (111) vorgesehen ist, und
- Aktivieren des Durchführens der Radarsondierung (200) entlang der einen oder mehreren Richtungen (205), wenn Strahlkorrespondenz besteht.

3. Verfahren nach Anspruch 1 oder 2,
wobei die Radarsondierung (200) als Reaktion auf Identifizierung des einen oder der mehreren Strahlen (311-313, 331-333, 311A-313A, 331A-333A) durchgeführt wird.

4. Verfahren nach einem der vorhergehenden Ansprüche, ferner umfassend:
- Übermitteln eines Steuersignals (4001) auf der drahtlosen Verbindung (111), das mindestens eine Radarsondierungsbeschränkung angibt, und
- Durchführen der Radarsondierung (200) gemäß der mindestens einen Radarsondierungsbeschränkung.

5. Verfahren nach Anspruch 4,
wobei die Radarsondierungsbeschränkung mindestens eine einer Sendeleistungsbeschränkung (272), einer Timingbeschränkung, einer Frequenzbandbeschränkung (279) und einer räumlichen Beschränkung (271) umfasst.

6. Verfahren nach einem der vorhergehenden Ansprüche,
wobei die mindestens eine Strahlabtastung (300-304) eine Empfangsstrahlabtastung (300, 302, 303) eines Pilotsignals (152, 153, 154) umfasst,
wobei die Empfangsstrahlabtastung (300, 302, 303) Messungen einer Empfangssignalstärke des Pilotsignals (152, 153, 154) umfasst,
wobei der eine oder die mehreren Strahlen (311-313, 331-333, 311A-313A, 331A-333A) auf der Basis der Empfangssignalstärke identifiziert werden.

7. Verfahren nach Anspruch 6,
wobei die Empfangsstrahlabtastung (300, 302, 303) eine Messung eines Spektralleistungspegels aufgrund eines von einer oder mehreren weiteren drahtlosen Kommunikationsvorrichtungen (299) stammenden Signals umfasst,
wobei mindestens eine der einen oder mehreren Richtungen (205) und einer Sendeleistung (281) der Radarsondierung (200) auf der Basis des Spektralleistungspegels bestimmt werden.

8. Verfahren nach einem der vorhergehenden Ansprüche,
wobei die mindestens eine Strahlabtastung (300-304) eine Sendestrahlabtastung (300, 301, 304) eines Pilotsignals (152, 153, 154) umfasst,
wobei der eine oder die mehreren Strahlen (311-313, 331-333, 311A-313A, 331A-333A) auf der Basis eines der Sendestrahlabtastung (300, 301, 304) zugeordneten Rückkopplungssignals (4002, 4005) identifiziert werden.

9. Verfahren nach einem der vorhergehenden Ansprüche, ferner umfassend:
- Setzen einer Sendeleistung (281) der Radarsondierung (200) auf der Basis einer Empfangssignalstärke eines Pilotsignals (152, 153, 154) der mindestens einen Strahlabtastung (300-304) und/oder eines Spektralleistungspegels einer Empfangsstrahlabtastung (300, 302, 303) der mindestens einen Strahlabtastung (300-304).

10. Verfahren nach einem der vorhergehenden Ansprüche,
wobei die mindestens eine Strahlabtastung (300-304) einem ersten Frequenzband (501) zugeteilt ist,
wobei die Kommunikation einem zweiten Frequenzband (502) zugeteilt wird, das in dem ersten Frequenzband (501) enthalten ist,
wobei die Radarsondierung (200) gegebenenfalls einem dritten Frequenzband (503) zugeteilt wird, das größer als das zweite Frequenzband ist.

## Revendications

1. Procédé de fonctionnement d'un dispositif de communication sans fil (101, 102), le procédé comprenant les étapes suivantes :
- effectuer au moins un balayage de faisceau (300-304) pour identifier un ou plusieurs faisceaux (311-313, 331-333, 311A-313A, 331A-333A) pour une communication sur une liaison sans fil (111) entre le dispositif de communication sans fil (101, 102) et un autre dispositif de communication sans fil (101, 102),
- déterminer une ou plusieurs directions (205) sur la base de l'au moins un balayage de faisceau (300-304), et
- effectuer un sondage radar (200) le long d'une ou plusieurs directions (260-263).

2. Procédé selon la revendication 1, comprenant en outre les étapes suivantes :
- établir si une correspondance de faisceau est fournie sur la liaison sans fil (111), et
- activer ladite exécution du sondage radar (200) le long d'une ou plusieurs directions (205) s'il y a une correspondance de faisceau.

3. Procédé selon la revendication 1 ou la revendication 2,
dans lequel le sondage radar (200) est effectué en réponse à l'identification d'un ou plusieurs faisceaux (311-313, 331-333, 311A-313A, 331A-333A).

4. Procédé selon l'une quelconque des revendications précédentes, comprenant en outre les étapes suivantes :
- communiquer un signal de commande (4001) sur la liaison sans fil (111) indiquant au moins une contrainte de sondage radar, et
- effectuer le sondage radar (200) en fonction de l'au moins une contrainte de sondage radar.

5. Procédé selon la revendication 4,
dans lequel la contrainte de sondage radar comprend au moins une restriction parmi une restriction de puissance d'émission (272), une restriction de timing, une restriction de bande de fréquences (279) et une restriction spatiale (271).

6. Procédé selon l'une quelconque des revendications précédentes,
dans lequel l'au moins un balayage de faisceau (300-304) comprend un balayage de faisceau de réception (300, 302, 303) d'un signal pilote (152, 153, 154),
où le balayage de faisceau de réception (300, 302, 303) comprend des mesures d'une intensité de signal reçu du signal pilote (152, 153, 154),
où les un ou plusieurs faisceaux (311-313, 331-333, 311A-313A, 331A-333A) sont identifiés sur la base de l'intensité du signal reçu.

7. Procédé selon la revendication 6,
dans lequel le balayage de faisceau de réception (300, 302, 303) comprend une mesure d'un niveau de puissance spectrale dû à un signal provenant d'un ou de plusieurs autres dispositifs de communication sans fil (299),
où au moins une des une ou plusieurs directions (205) et une puissance d'émission (281) du sondage radar (200) sont déterminées sur la base du niveau de puissance spectrale.

8. Procédé selon l'une quelconque des revendications précédentes,
dans lequel l'au moins un balayage de faisceau (300-304) comprend un balayage de faisceau d'émission (300, 301, 304) d'un signal pilote (152, 153, 154),
où les un ou plusieurs faisceaux (311-313, 331-333, 311A-313A, 331A-333A) sont identifiés sur la base d'un signal de rétroaction (4002, 4005) associé au balayage de faisceau d'émission (300, 301, 304).

9. Procédé selon l'une quelconque des revendications précédentes, comprenant en outre l'étape suivante :
- régler la puissance d'émission (281) du sondage radar (200) sur la base d'au moins un élément parmi une intensité de signal reçu d'un signal pilote (152, 153, 154) de l'au moins un balayage de faisceau (300-304) et un niveau de puissance spectrale d'un balayage de faisceau de réception (300, 302, 303) de l'au moins un balayage de faisceau (300-304).

10. Procédé selon l'une quelconque des revendications précédentes,
dans lequel l'au moins un balayage de faisceau (300-304) est attribué à une première bande de fréquences (501),
où la communication est allouée à une deuxième bande de fréquences (502) qui est incluse dans la première bande de fréquences (501),
où le sondage radar (200) est éventuellement attribué à une troisième bande de fréquences (503) qui est plus grande que la deuxième bande de fréquences.
